# EUROPÄISCHE PATENTSCHRIFT

(11) **EP 2 808 775 B1**
(45) Veröffentlichungstag und Bekanntmachung des Hinweises auf die Patenterteilung: **08.03.2023**
(21) Anmeldenummer: 14169410.9
(22) Anmeldetag: 22.05.2014
(51) Int. Cl.: G06F 3/0488, B60H 1/00

(54) **Controller für ein Informationswiedergabesystem für ein Fahrzeug**
Controller for an information display system for a vehicle
Contrôleur pour un système d'affichage d'informations pour un véhicule

(30) Priorität: 27.05.2013 DE 102013008950
(43) Veröffentlichungstag der Anmeldung: 03.12.2014
(73) Patentinhaber: Volkswagen Aktiengesellschaft, 38440 Wolfsburg (DE)
(72) Erfinder: Kötter, Nils, 38126 Braunschweig (DE); Wild, Holger, 10179 Berlin (DE)

(56) Entgegenhaltungen:
- EP-A1- 2 045 700
- EP-A2- 2 076 000
- DE-A1-102009 023 897
- DE-A1-102010 048 745
- JP-A- 2003 195 998
- US-A- 5 305 435
- US-A1- 2007 220 444
- US-A1- 2011 107 272
- US-A1- 2012 054 667
- US-A1- 2012 166 944
- Linder Brad: "List of Windows 8 touch-based gestures - Liliputing", , 12 March 2012 (2012-03-12), pages 1-6, XP055933024, https://liliputing.com/2012/03/list-of-win dows-8-touch-based-gestures.html Retrieved from the Internet: URL:https://web.archive.org/web/2012031623 0018/https://liliputing.com/2012/03/list-o f-windows-8-touch-based-gestures.html [retrieved on 2022-06-20]
- Liliputing: "List of Windows 8 touch-based gestures", , 13 March 2012 (2012-03-13), XP055932963, Retrieved from the Internet: URL:https://www.youtube.com/watch?v=6N64xs 3OC08 [retrieved on 2022-06-17]

## Beschreibung

Ausführungsbeispiele betreffen ein System für die Wiedergabe von Information gemäß Anspruch 1, ein Verfahren zur Wiedergabe zumindest eines Inhalts gemäß Anspruch 7 und ein Programm mit einem Programmcode zum Durchführen eines Verfahrens zur Wiedergabe eines Inhalts gemäß Anspruch 8.

In modernen Fahrzeugen gibt es bereits heute eine große Anzahl von Geräten, die der Wiedergabe von unterschiedlichen Informationen dienen. Die wiederzugebenden Informationen und/oder Inhalte reichen von Fahrzeugstandsparametern, wie z. B. Geschwindigkeit, Motordrehzahl, Tankfüllstand oder Kilometerzähler, über Navigations- und Kommunikationsinformationen bis hin zu Unterhaltungsmedien, wie z. B. Filme, Radio oder Spiele. Dabei wird die Anzahl der verfügbaren Informationen immer größer. Entsprechend steigt auch die Anzahl und Vielfalt der Anzeigesysteme. Heute können beispielsweise neben analogen Anzeigeinstrumenten auch LED-Anzeigen (Light Emitting Diode, Leuchtdiode), TFT-Bildschirme (Thin Film Transistor, Dünnschichttransistor) oder berührungsempfindliche Bildschirme, so genannte Touchscreens, vorgefunden werden.

Die Bedienung der Wiedergabesysteme sollte dabei möglichst einfach und intuitiv gestaltet werden, damit der Benutzer des Fahrzeugs bei der Steuerung des Wiedergabesystems möglichst wenig vom Steuern des Fahrzeugs abgelenkt wird. Je weniger der Fahrer von seiner wichtigsten Tätigkeit, dem Steuern des Fahrzeugs, abgelenkt wird, desto höher ist wiederum die Benutzungssicherheit des Informationswiedergabesystems.

DE 10 2010 048 745 A1 betrifft eine Benutzerschnittstelle und ein Verfahren zum Bedienen einer Benutzerschnittstelle, insbesondere einer Benutzerschnittstelle in einem Kraftfahrzeug. Die Benutzerschnittstelle kann eine Bedieneinrichtung sowie eine Anzeigeeinrichtung umfassen, wobei mittels der Bedieneinrichtung vorbestimmte Funktionen des Kraftfahrzeugs aktivierbar oder deaktivierbar sind und mittels der Anzeigeeinrichtung eine visuelle Information z. B. eines Kraftfahrzeugführers erfolgen kann.

DE 10 2009 023 897A1 lehrt ein Verfahren zum Anzeigen einer Anzeigevorrichtung eines Fahrzeugs mit einem Display, mit welchem verschiedene betrachtungsseitenspezifische Informationsanzeigen erzeugbar sind. Bei dem Verfahren wird durch die Betätigung eines Bedienelements die Informationsanzeige für eine erste Betrachtungsseite so verändert, dass für diese Betrachtungsseite die Informationsanzeige einer zweiten Betrachtungsseite dargestellt wird.

US 2011/0107272 lehrt ein Anzeigeverfahren und eine Anzeigevorrichtung, und insbesondere eine Benutzerschnittstelle mit mehreren Anwendungen, die gleichzeitig und / oder unabhängig unter Verwendung einfacher Fingergesten bedient werden können.

Die Druckschrift Linder Brad: List of Windows 8 touch-based gestures, Liliputing, (https://web.archive.org/web/20120316230018/https://liliputing.com/2012/03/list-of-windows-8-touch-based-gestures.html) lehrt ein Liste von Windows 8 berührungsbasierten Gesten.

Das Videodokument: List of Windows 8 touch-based gestures, Liliputing, (https://youtube.com/watch?v=6N64xs3OC08) zeigt eine Liste von Windows 8 berührungsbasierten Gesten.

Es besteht daher der Bedarf, eine einfache und intuitive Bedienung des Informationswiedergabesystems bspw. für ein Fahrzeug ermöglichen, um die Benutzungssicherheit des Informationswiedergabesystems und damit auch des Fahrzeugs zu erhöhen.

Diesem Bedarf trägt ein System für die Wiedergabe von Information gemäß Anspruch 1, ein Verfahren zur Wiedergabe zumindest eines Inhalts auf einer Anzeigefläche einer Anzeigevorrichtung in einem Informationswiedergabesystem gemäß Anspruch 7 und ein Programm mit einem Programmcode gemäß Anspruch 8, Rechnung.

Einige Ausführungsbeispiele ermöglichen dies durch Verwenden eines Controllers für ein Informationswiedergabesystem für ein Fahrzeug. Der Controller umfasst eine Ausgangseinrichtung zum Bereitstellen eines von dem Controller erzeugten Ausgangssignals, das eine Wiedergabe eines Inhalts auf einer Anzeigefläche einer Anzeigevorrichtung bewirkt. Der Controller umfasst ferner eine Eingangseinrichtung zum Empfangen eines Eingangssignals, das zu einer Bewegung eines Benutzers relativ zu der Anzeigefläche korrespondiert. Ferner ist der Controller ausgebildet, um ein erstes Ausgangssignal zu erzeugen, das eine Wiedergabe von zumindest einem ersten Inhalt in der Anzeigefläche bewirkt. Der Controller ist zusätzliche ausgebildet, um ein zweites Ausgangssignal zu erzeugen, das eine zusätzliche Wiedergabe eines zweiten Inhalts in der Anzeigefläche bewirkt, wenn das Eingangssignal zu einer an einem vorbestimmten Rand der Anzeigefläche beginnenden und sich von dem Rand weg erstreckenden Bewegung des Benutzers korrespondiert, wobei das zweite Ausgangssignal die Wiedergabe des zweiten Inhalts in einem Teilbereich der Anzeigefläche bewirkt, die an den vorbestimmten Rand angrenzt.

Mit Bewegung ist gemeint, dass der Benutzer bspw. mit seiner Hand, einem Finger oder einem Gegenstand, in einer zeitlichen Abfolge einer Mehrzahl von Raumkoordinaten durchläuft. Bei seiner Bewegung kann der Benutzer eine Oberfläche berühren oder einen Abstand zu dieser einhalten. Eine Bedienung ist haptisch, durch Berührung oder berührende Bewegung und/oder gestisch durch eine nicht berührende Bewegung möglich. Ein Erfassen kann über ein Kamerasystem durch eine Gestensteuerung und/oder durch eine Bewegung auf der Oberfläche des berührungsempfindlichen Bildschirms oder Touchscreens realisiert werden.

Unter einem Eingangssignal, das zu einer Bewegung eines Benutzers korrespondiert, wird jegliches analoge oder digitale Signal verstanden, das von der Eingangseinrichtung empfangen werden kann. Beispielsweise ist das Eingangssignal ein Wert der einer Bewegung des Benutzer zugeordnet ist, ein Feld in einer skalierten Fläche oder Raumkoordinaten einer Bewegung eines Benutzers.

Als erstes Ausgangssignal kommt jegliches analoge oder digitale Signal (CVBS, LVDS, VDA) in Frage, mittels dem eine Widergabe eines Inhalts also eine Anzeige auf einem Bildschirm möglich ist.

Dadurch, dass das Eingangssignal zu einer an einem vorbestimmten Rand der Anzeigefläche beginnenden und sich von dem Rand weg erstreckenden Bewegung des Benutzers korrespondiert, kann dem Benutzer auf einfache Art und Weise ermöglicht werden, einen zweiten Inhalt über eine intuitive Bewegung ohne Kenntnis des Systems zu öffnen. Dadurch, dass sich der zweiter Inhalt öffnet bzw. der zweite Inhalt, in einem Bereich der Anzeigefläche und/oder von einem Rand der Anzeigefläche aus wiedergegeben wird, an dem der Benutzer den Inhalt aufgrund seiner ausgeführten Bewegung oder Benutzungsbewegung erwartet oder haben möchte, kann ermöglicht werden, das Informationswiedergabesystem besonders einfach und intuitiv zu bedienen.

Die Bewegung des Benutzers kann alle beliebigen Muster aufweisen. Beispielsweise kann sie punktförmig ausgebildet sein. Dadurch kann der Benutzer das Gefühl erhalten, dass sich der zweite Inhalt als Reaktion auf ein Drücken in einem Bereich, insbesondere an dem vorbestimmten Rand der Anzeigefläche öffnet. Alternativ kann die Bewegung des Benutzers auch ein Wischen oder Ziehen sein, so dass der Benutzer das Gefühl hat, dass sich als Reaktion zu seiner Bewegung der zweite Inhalt öffnet. Desweiteren, kann sich der zweite Inhalt dabei in der Geschwindigkeit der Bewegung des Benutzer öffnen und/oder einen Teilbereich einnehmen, der im Wesentlichen einer Länge der Bewegung des Benutzers entspricht. Die Bewegung kann sich im Wesentlichen parallel zu einem anderen Rand der Anzeigefläche erstrecken.

Ein erster Inhalt kann eine beliebige Funktion abbilden, repräsentieren oder anzeigen, beispielsweise ein Navigationssystems, eine Anzeige des Radios oder eine Anzeige einer Telefonfunktion. Ein erster Inhalt kann auch ein schwarzer oder leerer oder nicht ausgeleuchteter Bildschirm sein, der keine Funktion oder keinen Inhalt anzeigt.

Das zweite Ausgangssignal bewirkt die Wiedergabe des zweiten Inhalts in einem ersten Teilbereich der Anzeigefläche und die Wiedergabe des ersten Inhalts in einem anderen, insbesondere zweiten Teilbereich der Anzeigefläche. Mit anderen Worten werden der erste Inhalt und der zweite Inhalt gleichzeitig angezeigt. Dadurch kann ermöglicht werden, dass ein Benutzer den ersten Inhalt bzw. dessen Wiedergabe bzw. dessen Funktion weiterhin sehen, bedienen und/oder benutzen kann. In einigen Ausführungsbeispielen wird der erste Inhalt verkleinert und/oder vereinfacht in dem anderen bzw. zweiten Teilbereich dargestellt oder wiedergegeben.

Das zweite Ausgangssignal bewirkt die Wiedergabe einer Information über eine Funktionalität des Fahrzeugs in dem ersten Teilbereich, wobei die Funktionalität einem Ort innerhalb des Fahrzeugs zugeordnet ist, wobei der Ort zu dem vorbestimmten Rand korrespondiert.

Dabei kann eine Funktionalität des Fahrzeugs jedwede Funktionalität des Fahrzeugs betreffen, bspw. eine Sitzheizung, eine Klimaanlage, insbesondere Heizung, eine Sitzeinstellung, ein Seitenspiegel, ein Fensterheber, eine Musikanlage, insbesondere ein Radio bzw. eine Lautstärkeregelung und/oder ein Soundsystem, eine Kindersicherung und/oder ein Türverriegelungsmechanismus.

Im Folgenden beziehen sich alle Richtungsangaben auf eine Position einer Person im Fahrzeug, mit Blickrichtung in Fahrtrichtung.

Dadurch, dass die Funktionalität einem Ort innerhalb des Fahrzeugs zugeordnet ist, wobei der Ort zu dem vorbestimmten Rand korrespondiert, kann die Funktionalität besonders einfach und intuitiv bedient bzw. angezeigt werden.

Mit anderen Worten ausgedrückt, bedeutet dies, dass beispielsweise der zweite Inhalt, wenn er von einer Bewegung des Benutzers, die an einem rechten Rand oder Seitenrand, der Anzeigefläche beginnt und sich von dem rechten Seitenrand weg in die Anzeigefläche erstreckt, eine Funktionalität des Fahrzeugs betreffen kann, die von der Fahrtrichtung aus gesehen eine rechte Seite des Fahrzeugs betrifft und/oder bedienbar macht. Beispielsweise könnte mit der Bewegung vom rechten Seitenrand aus ein zweiter Inhalt geöffnet werden oder eine Funktion dargestellt werden, die einen auf der rechten Seite angeordnete Sitz, insbesondere den Fahrersitz, insbesondere dessen Einstellung (Höhe, Rückenlehen, Sitzfläche) und Sitzheizung, den rechte Seitenspiegel, ein Fenster auf der rechten Seite oder eine Einstellung der Lausprecher auf der rechten Fahrzeugseite betrifft, anzeigt und/oder bedienbar macht. Analog wird eine zweiter Inhalt, der über eine Bewegung des Benutzers, die an einem linken Rand oder Seitenrand der Anzeigefläche beginnt, wiedergegeben oder geöffnet wird, eine Funktion betreffen, anzeigen und/oder bedienbar machen, die eine linke Seite des Fahrzeugs, eine linken Fahrzeugsitz, insbesondere den Beifahrersitz, betrifft. Analog wird über eine Bewegung des Benutzers, die an einem oberen Rand der Anzeigefläche beginnt, ein zweiter Inhalt geöffnet, der eine Funktion betrifft, die sich über der Anzeigefläche oder an der Decke des Fahrzeugs befindet. Entsprechende Beispiele wären: ein Lüftungssystem für das Abtauen der Frontscheibe, zumindest ein Scheibenwischer, insbesondere der Frontscheibe, Rückspiegel, insbesondere Abblenden oder Einstellen derselben und/oder aktivieren einer Innenraumbeleuchtung.

Zweckmäßigerweise kann der zweite Inhalt, wenn er von einer Bewegung des Benutzers, die an einem unteren Rand der Anzeigefläche beginnt, eine Funktionalität des Fahrzeugs betreffen, die eine Position unterhalb der Anzeigefläche und/oder eine Position an einer Rückseite des Fahrzeugs einnimmt. Beispiele für solche Funktionen sind: eine Fußraumbeleuchtung, eine Fußraumheizung, eine Heckscheibenheizung oder ein Heckscheibenwischer. Durch die Korrespondenz zwischen der Bewegung zum Aufrufen, der Anzeige innerhalb der Anzeigefläche und Position der Funktion im Fahrzeug kann ein Benutzer, insbesondere Fahrer oder Beifahrer auf einfache und intuitive Art und Weise Funktionen des Fahrzeugs anzeigen lassen und bedienen. Dies ist möglich, weil ein Inhalt geöffnet, wiedergegeben, und/oder bedient werden kann, über eine Bewegung, die einer Lage der gewünschten Funktion oder Information im Fahrzeug entspricht.

Bei einigen weiteren Ausführungsbeispielen bewirkt das zweite Ausgangssignal die Wiedergabe einer Funktionalität einer Klimaanlage des Fahrzeugs. Dadurch kann ein Menü zum Anzeigen eines Status oder einer Einstellung der Klimaanlage auf einfache und intuitive Art und Weise angezeigt und aufgerufen werden. Beim Anschalten des Klimamenüs wird der bisherige Inhalt des Displays verkleinert und auf der gewählten Seite zusätzlich das Klimamenü angezeigt. Der verkleinert dargestellte Inhalt lässt sich weiter parallel bedienen. Einem ersten Benutzer kann ermöglicht werden die Funktion des ersten Inhalts zu bedienen und einem zweiten Benutzer kann ermöglicht werden die Klimaanlage, bzw. die Funktion des zweiten Inhalts zu bedienen. Die Klimaanlage ist eine Funktion im Fahrzeug, die während der Fahrt sehr häufig bedient wird. Trotzdem sollen andere Funktionen, beispielsweise ein Navigationsgerät, weiterhin gleichzeitig bzw. parallel angezeigt werden, funktionieren und bedienbar sein. Da sich das Klimamenü, wie beschrieben, sehr einfach und intuitiv anzeigen lässt und die Funktion des zweiten Inhalts angezeigt und bedienbar bleibt, wird der Bediener, insbesondere der Fahrer nur so gering wie notwendig von seiner Hauptaufgabe dem Fahren abgelenkt. Dadurch, dass der erste Inhalt nicht ausgeblendet wird, muss der Bediener diesen nach dem Beenden der Darstellung der Klimaanlage nicht wieder Aufrufen, wodurch seine Konzentration vom Fahren abgelenkt werden könnte.

Bei einigen Ausführungsbeispielen zeigt der zweite Inhalt ein Menü an, mit dem die Innenraumtemperatur und die Sitzheizung eingestellt werden können. Dadurch kann der Fahrer mit einer Bedienbewegung ein Menü aufrufen, über das sich alle Temperatureinstellungen, insbesondere auf einer Fahrzeugseite, vornehmen lassen.

In einigen Ausführungsbeispielen bewirkt das erste Ausgangssignal die Wiedergabe zumindest eines Anzeigeaufteilfeldes als Teil des ersten Inhalts auf der Anzeigefläche. Das Anzeigeaufteilfeld kann für einen Benutzer einen Startpunkt einer Bedienbewegung, die zur Wiedergabe eines zweiten Inhalts führt, markieren. Das Anzeigeaufteilfeld kann die Form eines Pfeils oder Dreiecks aufweisen. Dadurch kann die Richtung einer Bedienbewegung und/oder eine Richtung, in die sich ein Inhalt korrespondierend zu einer Bedienbewegung von dem Anzeigeaufteilfeld aus öffnet, angezeigt werden. Das Anzeigeaufteilfeld stellt damit eine Art Lasche dar, über die ein zweiter Inhalt geöffnet oder aufgezogen werden kann. Dadurch erhält der Bediener eine leicht verständliche Anleitung, die eine intuitive Bedienung ermöglicht.

In einigen Ausführungsbeispielen ist das Anzeigeaufteilfeld an einem Rand der Anzeigefläche angeordnet. Eine Spitze des Pfeil und/oder Dreiecks des Anzeigeaufteilfelds kann von einem Rand zu einem mittleren Bereich der Anzeigefläche weisen. Das Anzeigeaufteilfeld kann ein Zeichen und/oder eine Beschriftung umfassen, die angibt, welche Funktionalität, ein Inhalt, insbesondere zweiter Inhalt aufweist, der über eine Bewegung die an diesem Anzeigeaufteilfeld beginnt, geöffnet werden kann.

In einigen Ausführungsbeispielen kann an jedem Rand der Anzeigefläche ein Anzeigeaufteilfeld eingeblendet werden. Dadurch können Bewegungen, die zum Anzeigen von einem zweiten Inhalt führen, an allen Rändern, an denen dies vorgesehen ist, angezeigt werden.

In einigen Ausführungsbeispielen wird nach dem Öffnen des zweiten Inhalts über das Anzeigeaufteilfeld an einer Begrenzungsfläche des Inhalts, der dem Rand gegenüberliegt, von dem der Inhalt aus geöffnet wurde, ein weiteres Anzeigeaufteilfeld dargestellt. Dieses Anzeigeaufteilfeld kann so ausgerichtet sein, dass eine Dreieck- oder Pfeilspitze eine Bewegungsrichtung angibt, mittels in der eine entsprechende Bewegung zum Verkleinern oder Schließen des geöffneten zweiten Inhalts führt.

In einigen Ausführungsbeispielen wird das zweite Ausgangssignal erzeugt, wenn die Bewegung des Benutzers an dem Anzeigeaufteilfelds beginnt. Mit anderen Worten bedeutet dies, dass wenn ein Benutzer auf das Anzeigeaufteilfeld zeigt oder drückt oder mit einer wischenden Bewegung das Anzeigeaufteilfeld in Richtung eines mittleren Bereichs der Anzeigefläche vom Rand der Anzeigefläche wegzieht, das zweite Ausgangssignal erzeugt wird, das bewirkt, dass der zweite Inhalt wiedergegeben wird. Dem Benutzer kann ermöglicht werden, eine Bewegung intuitiv auszuführen, weil ein Startpunkt und/oder eine Richtung der Bewegung von dem Anzeigeaufteilfeld markiert und/oder angezeigt wird und/oder werden.

In einigen Ausführungsbeispielen bewirkt das erste Ausgangssignal die Wiedergabe eines zusätzlichen Anzeigeaufteilungsfelds auf der Anzeigefläche. Mit anderen Worten bedeutet dies, dass an zumindest einem Rand der Anzeigefläche zumindest zwei Anzeigeaufteilfelder eingeblendet werden können. Dadurch können mehrere unterschiedliche Funktionalitäten über ein eigenes Anzeigeaufteilfeld geöffnet oder bedient werden. Ein Benutzer muss sich nicht durch mehrere Stufen eines Menüs oder Untermenüs bewegen, sondern kann die gewünscht Funktion über eine Bewegung oder Bedienhandlung öffnen oder aufziehen.

In typischen Ausführungsbeispielen ist das zusätzliche Anzeigeaufteilfeld auf der Anzeigefläche der Funktionalität der Klimaanlage des Fahrzeugs zugeordnet. Dem Benutzer kann beispielsweise ermöglicht werden, die Klimaanlage, die im Vergleich zu anderen Funktionen währen der Fahrt besonders häufig eingestellt und bedient wird, auf einfache Art und Weise intuitiv zu bedienen. Mit anderen Worten bedeutet dies, dass das Klimamenü über eine eigene vordefinierte Bewegung, deren Startpunkt über ein eigenes Anzeigeaufteilfeld markiert wird, geöffnet werden kann. Für den Benutzer, lässt sich das Klimamenü über eine eigene Klimalasche aufziehen. Durch dieses zusätzliche Anzeigeaufteilfeld für die Funktionalität Klimaanlage, bzw. die Klimalasche, in einem ausreichenden Abstand von einem Anzeigeaufteilfeld, dem eine andere oder sogar eine Mehrzahl von Funktionalitäten zugeordnet ist oder sind, kann ein einfaches Öffnen des Klimamenüs durch einen Benutzer gewährleistet werden, ohne dass dieser besonders genau auf das Anzeigefeld zielen oder sehen muss und dadurch unnötig von seiner Hauptaufgabe, dem Steuern des Fahrzeugs, abgelenkt wird.

In einigen Ausführungsbeispielen ist die Eingangseinrichtung ferner ausgebildet, ein Auslösesignal zu empfangen. Das Auslösesignal wird erzeugt, korrespondierend zu einer Näherungsbewegung eines Benutzers an die Anzeigefläche. Wenn die Eingangseinrichtung das Auslösesignal empfängt, erzeugt der Prozessor das erste Ausgangssignal. Mit anderen Worten ausgedrückt, besteht die Möglichkeit, das Anzeigeaufteilfeld nicht permanent wiederzugeben oder einzublenden. Erst wenn sich der Benutzer oder eine Hand des Benutzers der Anzeigefläche nähert oder eine Näherungsbewegung eines anderen Gegenstands, beispielsweise eines Stifts, detektiert wird, insbesondere von einer Näherungssensorik, wird das Anzeigeaufteilfeld und/oder das zusätzliche Anzeigeaufteilfeld eingeblendet. Es kann ermöglicht werden für den Benutzer, wenn er eine Bedienungshandlung vornehmen möchte, einen Startpunkt für seine Bewegung, insbesondere Bedienbewegung zu markieren, sodass er die Bewegung intuitiv, ohne lange zu überlegen und ohne von anderen Aufgaben abgelenkt zu werden, vornehmen kann. Dadurch, dass das oder die Anzeigeaufteilfelder erst aufgrund des Auslösesignals bzw. einer sich nähernden Benutzerhand eingeblendet werden, wird der erste und/oder der zweiter Inhalt, während der Benutzer keine Bedienhandlung vornehmen möchte, nicht von dem oder sogar der Mehrzahl von Anzeigeaufteilfeldern verdeckt. Dadurch ist der dargestellte erste und/oder zweite Inhalt gut sichtbar und erkennbar. Die Anzeigefläche wird nicht durch die Einblendung zusätzlicher Bedienelemente oder Anzeigeaufteilfelder minimiert oder verkleinert.

In einigen Ausführungsbeispielen wird zum Erfassen der Näherungsbewegung eines Benutzers eine Näherungs- oder Annäherungssensorik, insbesondere eine Kamera oder ein hoch sensitiver Touchscreen oder eine berührungsempfindlicher Bildschirm verwendet. Dadurch kann die Näherungsbewegung zuverlässig erfasst werden.

In einigen Ausführungsbeispielen werden die Anzeigeaufteilfelder nur in einem vorbestimmten Bereich angezeigt, in dem eine Näherungsbewegung des Benutzers detektiert wird. Wenn sich also die Benutzerhand dem rechten Seitenrand nähert, werden nur vordefinierte Anzeigeaufteilfelder am rechten Seitenrand eingeblendet. Entsprechend wird oder werden, wenn sich die Benutzerhand dem linken Seitenrand nähert, nur dort das oder die Anzeigeaufteilfelder eingeblendet.

In einigen Ausführungsbeispielen bewirkt das zweite Ausgangssignal eine Wiedergabe eines dritten Inhalts, wobei die Wiedergabe des dritten Inhalts die Wiedergabe des ersten Inhalts oder die Wiedergabe des zweiten Inhalts ersetzt. Mit anderen Worten kann, auch wenn bereits in einem Teilbereich der Anzeigefläche ein erster Inhalt und in einem anderen Teilbereich der Anzeigefläche ein zweiter Inhalt dargestellt wird, über die beschriebenen Bewegungen eines Benutzers ein weiterer, dritter Inhalt geöffnet werden. Dabei kann der dritte geöffnete Inhalt den ersten Inhalt ersetzen, der in einem Teilbereich angeordnet ist, in dem sich der dritte Inhalt öffnet. Alternativ kann auch ein erster Inhalt, der in einem Teilbereich angeordnet ist, in dem der dritte Inhalt geöffnet wird, in einen Teilbereich, in dem der zweite Inhalt wiedergegeben wird, verschoben werden, sodass der zweite Inhalt nicht mehr angezeigt oder verdeckt wird. Dadurch kann, auch wenn bereits mehrere Inhalte auf der Anzeigefläche dargestellt werden, ein weiterer Inhalt, insbesondere das Klimamenü, auf intuitive Art und Weise vom Benutzer geöffnet und/oder bedient werden. Unnötige oder aufwändige Bedienhandlungen des Informationswiedergabesystems werden dadurch vermieden. Der Benutzer muss nicht zuerst den zweiten oder ersten Inhalt schließen, um den dritten Inhalt zu öffnen. Das erneute Öffnen des ersten oder zweiten Inhalts entfällt ebenfalls. Der erste oder zweite Inhalt steht nach dem Schließen des dritten Inhalts wieder zur Verfügung.

In einigen Ausführungsbeispielen kann die Anzeigefläche, insbesondere mechanisch, in mehrere Positionen bewegt werden. In einer ersten Position ist eine Anzeigefläche der Anzeigevorrichtung für einen Benutzer vollständig zu sehen. In einer zweiten Position ist die Anzeigevorrichtung so in einem Gehäuse versenkt, dass die Anzeigefläche nicht mehr für einen Benutzer sichtbar ist. In einer dritten Position ist die Anzeigevorrichtung nur teilweise in einem Gehäuse versenkt, sodass nur ein Teil einer Anzeigefläche für einen Benutzer sichtbar ist. In einem Zustand, in dem die Anzeigefläche vollständig für einen Benutzer sichtbar ist, können wie beschrieben, ein Inhalt oder ein zweiter Inhalt auf der Anzeigefläche dargestellt werden. Dadurch, dass die Anzeigevorrichtung in einem teilweise eingefahrenen Zustand betrieben wird, in dem nicht die ganze Anzeigefläche für einen Benutzer sichtbar ist, wird insbesondere bei Nachtfahrten die Blendwirkung des Displays reduziert.

In einigen Ausführungsbeispielen bewirkt das zweite Ausgangssignal eine reduzierte, vereinfachte und/oder verkleinerte Wiedergabe eines Inhalts, korrespondierend zu einem für einen Benutzer sichtbaren Teil des Anzeigefeldes, der nicht in einem Gehäuse versenkt ist. In einer Position der Anzeigefläche, in der nur ein Teil der Anzeigefläche für einen Benutzer sichtbar ist, wird der ursprünglich auf der Anzeigefläche dargestellte Inhalt vereinfacht und/oder verkleinert dargestellt, sodass der Benutzer zumindest wichtige Informationen erkennen kann. Dabei kann in der Ausgangsposition nur ein Inhalt oder ein erster und ein zweiter Inhalt auf der Anzeigefläche angezeigt werden. Dadurch, dass bei einer nur teilweise sichtbaren Anzeigefläche der Inhalt verkleinert und/oder vereinfacht dargestellt wird, kann ermöglicht werden zumindest die Hauptfunktionen anzuzeigen und/oder zu bedienen.

Einige Ausführungsbeispiele beziehen sich auf ein Informationswiedergabesystem umfassend einen Controller nach dem vorher beschriebenen Konzept und eine Anzeigevorrichtung, insbesondere mit einer berührungssensitiven Oberfläche, insbesondere einem Touchscreen. Die Anzeigeeinrichtung kann in dem Fahrzeug festinstalliert, bzw. mit dem Fahrzeug werkseitig beziehbar sein. Dadurch ist gewährleistet, dass Controller, Anzeigevorrichtung und Fahrzeug aufeinander abgestimmt sind.

In einigen Ausführungsbeispielen muss der Controller der Anzeigevorrichtung nicht physisch zugeordnet sein, sondern kann mit dieser über eine Vorrichtung zur Datenübertragung verbunden sein. Dadurch kann ein Nachrüsten eines Informationswiedergabesystems vereinfacht werden, insbesondere durch ein Softwareupdate.

In einigen Ausführungsbeispielen umfasst das Informationswiedergabesystem ferner eine Eingabetaste. Die Betätigung der Eingabetaste kann bewirken, dass das zweite Ausgangssignal erzeugt wird, insbesondere so, dass die Wiedergabe einer Funktionalität einer Klimaanlage des Fahrzeugs bewirkt wird. Mit anderen Worten umfasst das System eine Taste oder einen Schalter, insbesondere einen mechanischen Schalter, deren oder dessen Betätigung ein Menü zum Bedienen der Klimaanlage aufruft oder öffnet. Dadurch kann das Klimamenü immer zuverlässig geöffnet werden, auch wenn ein Benutzer Handschuhe trägt. In einigen Ausführungsbeispielen wird das Klimamenü, wenn es über die Eingabetaste aufgerufen wird, vollständig und nicht als Inhalt eines Teilbereichs angezeigt. Dadurch kann ein Benutzer, wenn er eine große Anzeige des Klimamenüs auf der Anzeigefläche wünscht, dieses auf einfache Art und Weise aufrufen.

Ausführungsbeispiele der vorliegenden Erfindung werden nachfolgend bezugnehmend auf die beiliegenden Figuren näher erläutert. Es zeigen:
- Figur 1: eine schematische Darstellung eines Controllers für ein Informationswiedergabesystem für ein Fahrzeug;
- Figur 2a, 2b: eine schematische Darstellung der Bedienung des Informationswiedergabesystems;
- Figur 3a, 3b: eine weitere schematische Darstellung der Bedienung des Informationswiedergabesystems;
- Figur 4a, 4b: eine weiter schematische Darstellung der Bedienung des Informationswiedergabesystems;
- Figur 5a, 5b: eine weitere schematische Darstellung eines weiteren Ausführungsbeispiels eines Informationswiedergabesystems mit einer Anzeigevorrichtung, die versenkbar ist;
- Figur 6a, 6b: eine weitere schematische Darstellung des Informationswiedergabesystems nach den Figuren 5a, 5b und
- Figur 7: ein Flussdiagramm des Verfahrens zur Wiedergabe zumindest eines Inhalts.

Verschiedene Ausführungsbeispiele werden nun ausführlicher unter Bezugnahme auf die beiliegenden Zeichnungen beschrieben, in denen einige Ausführungsbeispiele dargestellt sind. In den Figuren können die Dickenabmessungen von Linien, Schichten und/oder Regionen um der Deutlichkeit Willen übertrieben dargestellt sein.

Bei der nachfolgenden Beschreibung der beigefügten Figuren, die lediglich einige exemplarische Ausführungsbeispiele zeigen, können gleiche Bezugszeichen gleiche oder vergleichbare Komponenten bezeichnen. Ferner können zusammenfassende Bezugszeichen für Komponenten und Objekte verwendet werden, die mehrfach in einem Ausführungsbeispiel oder in einer Zeichnung auftreten, jedoch hinsichtlich eines oder mehrerer Merkmale gemeinsam beschrieben werden. Komponenten oder Objekte, die mit gleichen oder zusammenfassenden Bezugszeichen beschrieben werden, können hinsichtlich einzelner, mehrerer oder aller Merkmale, beispielsweise ihrer Dimensionierungen, gleich, jedoch gegebenenfalls auch unterschiedlich ausgeführt sein, sofern sich aus der Beschreibung nicht etwas anderes explizit oder implizit ergibt.

Gleiche Bezugszeichen bezeichnen in der gesamten Figurenbeschreibung gleiche oder ähnliche Elemente.

Man beachte, dass ein Element, das als mit einem anderen Element "verbunden" oder "verkoppelt" bezeichnet wird, mit dem anderen Element direkt verbunden oder verkoppelt sein kann oder dass dazwischenliegende Elemente vorhanden sein können. Wenn ein Element dagegen als "direkt verbunden" oder "direkt verkoppelt" mit einem anderen Element bezeichnet wird, sind keine dazwischenliegenden Elemente vorhanden. Andere Begriffe, die verwendet werden, um die Beziehung zwischen Elementen zu beschreiben, sollten auf ähnliche Weise interpretiert werden (z.B., "zwischen" gegenüber "direkt dazwischen", "angrenzend" gegenüber "direkt angrenzend" usw.).

Die Terminologie, die hierin verwendet wird, dient nur der Beschreibung bestimmter Ausführungsbeispiele und soll die Ausführungsbeispiele nicht beschränken. Wie hierin verwendet, sollen die Singularformen "einer," "eine", "eines " und "der, die, das" auch die Pluralformen beinhalten, solange der Kontext nicht eindeutig etwas anderes angibt. Ferner sei klargestellt, dass die Ausdrücke wie z.B. "beinhaltet", "beinhaltend", aufweist" und/oder "aufweisend", wie hierin verwendet, das Vorhandensein von genannten Merkmalen, ganzen Zahlen, Schritten, Arbeitsabläufen, Elementen und/oder Komponenten angeben, aber das Vorhandensein oder die Hinzufügung von einem bzw. einer oder mehreren Merkmalen, ganzen Zahlen, Schritten, Arbeitsabläufen, Elementen, Komponenten und/oder Gruppen davon nicht ausschließen.

Solange nichts anderes definiert ist, haben sämtliche hierin verwendeten Begriffe (einschließlich von technischen und wissenschaftlichen Begriffen) die gleiche Bedeutung, die ihnen ein Durchschnittsfachmann auf dem Gebiet, zu dem die Ausführungsbeispiele gehören, beimisst. Ferner sei klargestellt, dass Ausdrücke, z.B. diejenigen, die in allgemein verwendeten Wörterbüchern definiert sind, so zu interpretieren sind, als hätten sie die Bedeutung, die mit ihrer Bedeutung im Kontext der einschlägigen Technik konsistent ist, und nicht in einem idealisierten oder übermäßig formalen Sinn zu interpretieren sind, solange dies hierin nicht ausdrücklich definiert ist.

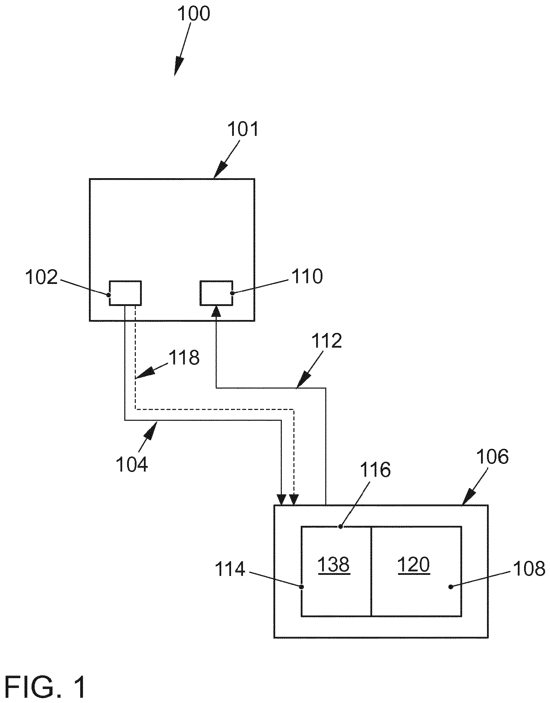

Die Figur 1 zeigt ein Blockdiagramm. Dieses umfasst einem Controller 101 für ein Informationswiedergabesystem. Ferner zeigt es eine Ausgangseinrichtung 102 zum Bereitstellen eines von dem Controller 101 erzeugten Ausgangssignals 104, das eine Wiedergabe eines Inhalts auf einer Anzeigefläche 108 einer Anzeigevorrichtung 106 bewirkt. Der Controller umfasst ferner eine Eingangseinrichtung 110 zum Empfangen eines Eingangssignals 112, das zu einer Bewegung eines Benutzers relativ zu der Anzeigefläche 108 korrespondiert.

Der Controller 101 ist ausgebildet, um ein erstes Ausgangssignal 104 zu erzeugen, das eine Wiedergabe von zumindest einem ersten Inhalt 120 in der Anzeigefläche 108 bewirkt, und wobei der Controller 101 ferner ausgebildet ist, um ein zweites Ausgangssignal 118 zu erzeugen, das eine zusätzliche Wiedergabe eines zweiten Inhalts 138 in der Anzeigefläche 108 bewirkt, wenn das Eingangssignal 112 zu einer an einem vorbestimmten Rand 114 der Anzeigefläche 108 beginnenden und sich von dem Rand 114 weg erstreckenden Bewegung des Benutzers korrespondiert. Das zweite Ausgangssignal 118 bewirkt die Wiedergabe des zweiten Inhalts in einem Teilbereich 116 der Anzeigefläche 108, die an dem vorbestimmten Rand 114 angrenzt.

Die in Figur 1 zum besseren Verständnis dargestellte, optionale Anzeigevorrichtung 106 kann beispielsweise eine LED-Anzeige (Light Emitting Diode, Leuchtdiode) ein TFT-Bildschirm (Thin Film Transistor, Dämmschichttransistor) ein berührungsempfindlicher Bildschirm, ein sogenannter Touchscreen oder ein Head-Up-Display (Kopf-Hoch-Anzeigesystem) sein.

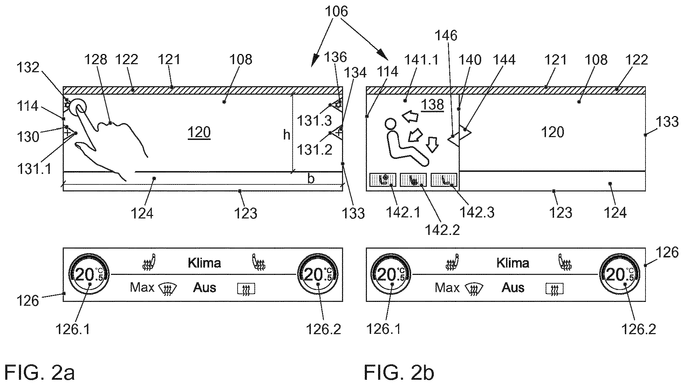

Die Figuren 2a und 2b zeigen eine schematische Darstellung der Bedienung des Informationswiedergabesystems, basierend auf dem beschriebenen Controller 101.

Figur 2a zeigt dazu die Anzeigefläche 108 eine Anzeigevorrichtung bei der ein Inhalt als Vollbild (Fullscreen) wiedergegeben wird. Zusätzlich kann die Anzeigefläche in einem oberen Bereich, von einem oberen Rand 121 aus, eine Statusleiste 122 anzeigen. In alternativen Ausführungsbeispielen kann die Statusleiste 122 weggelassen werden. Über die Statusleiste 122 kann ein Status der Anzeigevorrichtung beispielsweise eine Uhrzeit, ein Datum und/oder eine Laustärke angezeigt werden. In einem unteren Bereich der Anzeigefläche, von einem unteren Rand 123 aus, kann ein Bedienmenü 24 (Controllbar) angezeigt werden. Über das Bedienmenü 124 können unterschiedliche Funktionen in der Anzeigefläche 108 aufgerufen werden. In alternativen Ausführungsbeispielen wird auf die Anzeige des Bedienmenüs 124 verzichtet.

Des Weiteren zeigt die Figur 2a eine mechanische Eingabeschnittstelle 126 (Hardkey), insbesondere zum Aufrufen und/oder Bedienen der Klimaanlage. Die mechanische Eingabeschnittstelle 126 weist einen ersten Schalter 126.1 und einen zweiten Schalter 126.2 auf. Dabei lässt sich über den auf der linken Seite angeordneten Schalter 126.1 eine Einstellung der Klimaanlage für die linke Seite des Fahrzeugs und über den auf der rechten Seite angeordneten Schalter 126.2 eine Einstellung der Klimaanalage für die rechte Seite des Fahrzeugs vornehmen. Zweckmäßigerweise wird eine über die mechanische Eingabeschnittstelle 126 bzw. die Taster 126.1 oder 126.2 vorgenommene (nicht dargestellte) Bedienung der Klimaanlage als Inhalt in der Anzeigefläche 108 dargestellt. Dabei wird das Bedienmenü 124 der Klimaanlage als Vollbild (Fullscreen) dargestellt. Die Statusleiste 122 und das Bedienmenü 124 bleiben in typischen Ausführungsbeispielen auch bei der Anzeige des Klimamenüs als Fullscreen trotzdem sichtbar.

Figur 2a zeigt eine Bediensituation, bei der sich ein Benutzer bzw. dessen Hand 128 bereits an die Anzeigefläche 108 angenähert hat. Der erste Inhalt 120 wird als Vollbild (Fullscreen) wiedergegeben. Ferner ist in der Anzeigefläche 108 auch ein erstes Anzeigeaufteilfeld 130 (Softkey) wiedergegeben. Das Anzeigeaufteilfeld 130 ist an dem vorbestimmten Rand 114 angeordnet. Das Anzeigeaufteilfeld 130 weist eine Dreick- oder Pfeilform auf, sodass eine Spitze 131 in eine Richtung zeigt, in die sich ein zweiter Inhalt öffnen lässt.

In der Anzeigefläche 108 ist ein weiteres Anzeigeaufteilfeld 132 eingeblendet. Eine Form des weiteren Anzeigeaufteilfeld 132 entspricht der Form des Anzeigeaufteilfelds 130. Das Anzeigeaufteilfeld 132 weist eine Markierung auf. Die Markierung zeigt an, dass über das Anzeigeaufteilfeld 132 ein Menü zum Anzeigen und Bedienen der Klimaanlage geöffnet werden kann. Damit ist das Anzeigeaufteilfeld 123 eine sog. Klimalasche. Das weitere Anzeigeaufteilfeld ist an dem linken seitlichen Rand 114 und zwischen dem Anzeigeaufteilfeld 130 und dem oberen Rand 121 der Anzeigefläche 108 angeordnet. An einem dem linken Rand 114 gegenüberliegenden rechten Rand 133 der Anzeigefläche 108 sind weitere Anzeigeaufteilfelder 134 und 136 eingeblendet. Das Anzeigeaufteilfeld 136 entspricht im Wesentlichen dem Anzeigeaufteilfeld 132 und ist ebenfalls eine Klimalasche. Das Anzeigeaufteilfeld 134 ist im Wesentlichen analog zu dem Anzeigeaufteilfeld 130 ausgebildet. Die Spitzen 131.2 und 131.3 der Anzeigeaufteilfelder 134 und 136 weisen ebenfalls in die Richtung, in die ein Inhalt, über eine Bewegung, die an dem Anzeigeaufteilfeld beginnt, geöffnet werden kann, also weg von dem rechten Seitenrand 133.

Die Anzeigeaufteilfelder 130, 132, 134 und 136 können permanent mit dem ersten Inhalt 120 in der Anzeigefläche 108 angezeigt sein. In einigen Ausführungsbeispielen werden die Anzeigeaufteilfelder 130, 132, 134 und 136 erst aufgrund der sich nähernden Benutzerhand 128 eingeblendet. Dadurch erhält der Benutzer eine Markierung und Anzeige, von wo aus, in welche Richtung, welche Funktionen geöffnet und abgerufen werden kann.

In einem nicht dargestellten Ausführungsbeispiel besteht auch die Möglichkeit, wenn sich die Benutzerhand 128 dem rechten Rand 114 nähert, nur die Anzeigeaufteilfelder 130 und 132 an dem Rand 114 einzublenden. Es werden also nur Anzeigeaufteilfelder an dem Rand, in dessen Nähe eine Näherungsbewegung der Hand 128 detektiert wird, eingeblendet.

Entweder durch eine punktförmige Bewegung (Drücken) auf das Anzeigeaufteilfeld 132 oder durch eine ziehende oder wischende Bewegung vom Anzeigeaufteilfeld 132 in Richtung einer Spitze des Anzeigeaufteilfelds 132 mit der Benutzerhand 128, insbesondere einem Finger der Benutzerhand, wird ein zweiter Inhalt 138 wiedergegeben, insbesondere aufgezogen und geöffnet, wie in Figur 2b gezeigt. Der Inhalt 138 grenzt dabei an den Seitenrand 114, von dem aus die Bewegung zum Öffnen begonnen hat. Dabei kann während der Bewegung die Benutzerhand 128 die Anzeigefläche 108 berühren oder von der Anzeigefläche 108 beabstandet sein. Dabei wird der erste Inhalt 120 verkleinert und/oder vereinfacht in dem verbleibenden Teilbereich der Anzeigefläche 108 dargestellt. Die Anzeigeaufteilfelder 130, 132, 134 und 136 werden nach dem Öffnen des zweiten Inhalts 138 wieder ausgeblendet. An einer Grenze 140 zwischen dem ersten Inhalt 120 und dem zweiten Inhalt 138 werden weitere Anzeigeaufteilfelder 144 und 146 angezeigt. Diese Anzeigeaufteilfelder 144 und 146 können alternativ, wie für die Anzeigeaufteilfelder 130, 132, 134 und 136 beschrieben, erst aufgrund einer Näherungsbewegung eingeblendet werden. Die Spitzen der Anzeigeaufteilfelder 144 und 146 weisen jeweils in eine Richtung, die anzeigt, in welche Richtung die Grenze 140 über eine Bedienbewegung, die am entsprechenden Anzeigeaufteilfeld 144 oder 146 beginnt, verschoben werden kann. Mit anderen Worten kann über eine Bedienbewegung von dem Anzeigeaufteilfeld 144 aus der Bereich in dem der erste Inhalt 120 verkleinert und der Bereich in dem der zweite Inhalt 138 angezeigt wird, vergrößert werden. Eine Bewegung in Richtung des Anzeigeaufteilfelds 146 führt analog zu einer Vergrößerung des Bereichs des ersten Inhalts 120 und einer Verkleinerung des Bereichs, in dem der zweite Inhalt 138 angezeigt wird.

Beim vorliegenden Ausführungsbeispiel wird der zweite Inhalt 138 so geöffnet, dass die Statusleiste 122 auch nach dem Öffnen des zweiten Inhalts 138 über eine gesamte Breite b der Anzeigefläche 108 angezeigt wird. Das Bedienmenü 124 wird analog zum ersten Inhalt 120 verkleinert dargestellt.

In einem nicht dargestellten Ausführungsbeispiel wird das Bedienmenü 124 weiterhin vollständig angezeigt und der zweite Inhalt 138 nur über eine Höhe h, die einer Höhe des ersten Inhalts 120 entspricht, eingeblendet.

Der zweite Inhalt 138 zeigt ein Menü an, das zum Bedienen der Klimaanlage und der Sitzheizungseinstellung, die den linken Sitz im Fahrzeug betrifft, geeignet ist. Dazu ist als Zeichen 141.1 ein Icon oder Piktogramm, über das sich die Klimaeinstellung verändern und anzeigen lässt, eingeblendet. Über drei weiter icon- oder piktogrammförmige Zeichen 142.1, 142.2 und 142.3 lassen sich unterschiedliche Klimaeinstellungen, die den Sitz auf der linken Fahrzeugseite betreffen, einstellen.

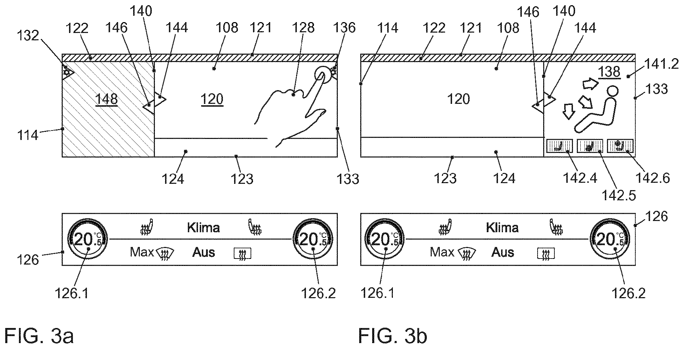

Analog zeigt Figur 3b das Ergebnis einer Bedienaktion, bei der das Anzeigeaufteilfeld 136 am rechten Seitenrand 133 bedient wurde. Wie in Figur 3b dargestellt, kann eine Klimaanlage für eine rechte Fahrzeugseite und die Sitzheizung für einen rechten Fahrzeugsitz, insbesondere den Beifahrersitz, über den Inhalt 138 bzw. die Zeichen 141.2 zur Einstellung der Klimaanlage auf der rechten Fahrzeugseite und die Zeichen 142.4 bis 142.6 zur Einstellung der Sitzheizung bedient werden.

Dadurch kann der Benutzer mit seiner Benutzerhand 128 über eine Bedienbewegung vom rechten Seitenrand 133 aus einen Inhalt 138 aufrufen, mittels dem eine Funktion, insbesondere die Klimaanlage und Sitzheizung der rechten Fahrzeughälfte bedient und/oder angezeigt wird.

Eine Bedienbewegung der Anzeigeaufteilfelder 134 oder 136 am rechten Seitenrand 133 der Anzeigefläche 108 führt zur Wiedergabe eines zweiten Inhalts 138 vom rechten Seitenrand 133 aus.

Figur 3a zeigt eine weitere Bediensituation, bei der bereits zwei Inhalte, nämlich der erste Inhalt 120 und ein weiterer Inhalt 148 auf der Anzeigefläche 108 dargestellt sind. Der Inhalt 148 kann über Betätigung der Anzeigefeldtaste 130, siehe Figur 2a geöffnet worden sein.

Über die Anzeigeaufteilfelder 144 und 146 kann die Grenze 140 zwischen dem ersten Inhalt 120 und dem weiteren Inhalt 148 verschoben werden. Durch Betätigung des zusätzlichen Anzeigeaufteilfelds 136 über die Benutzerhand 128, wie in Figur 3a dargestellt, wird der zweite Inhalt 138 wie in Figur 3b dargestellt vom rechten Seitenrand aus geöffnet 133. Dabei wird der vor der Bedienbewegung, wie in Figur 3a dargestellt, ursprünglich eingeblendete Inhalt 148 ausgeblendet und der erste Inhalt 120 in Richtung des Randes 114 verschoben.

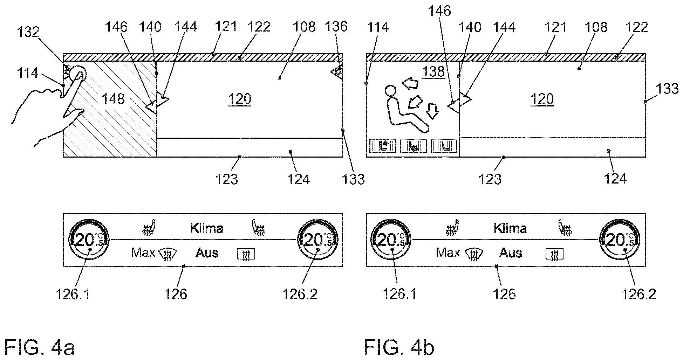

Analog kann, wie in den Figuren 4a und 4b gezeigt, bei einer Betätigung des zusätzlichen Anzeigeaufteilfeldes 132 am linken Seitenrand 114, wenn bereits der erste Inhalts 120 und der weitere Inhalt 148 auf der Anzeigefläche (Splitscreen) angezeigt werden, der zweite Inhalt 138 vom linken seitlichen Rand 114 geöffnet werden. Dabei überdeckt der zweite Inhalt 138 den zusätzlichen Inhalt 148 der zuvor an den linken seitlichen Rand 114 angrenzend angezeigt wurde. Der erste Inhalt 120 bleibt an seiner Position.

Analog würde, wenn vom rechten Seitenrand 133 aus ein Inhalt aufgerufen werden würde, der zu einer Splitscreendarstellung führt, der zweite Inhalt 138, der über das zusätzliche Anzeigeaufteilfeld 136 am rechten Seitenrand 133 aufgerufen wird, im Bereich des zusätzlichen Inhalts 148 geöffnet werden.

Mit anderen Worten befinden sich auf der linken und rechten Seite der Anzeigevorrichtung bzw. des Displays dedizierte Bedienelemente, Klimalaschen bzw. Anzeigeaufteilfelder für das Aufschalten des Klimamenüs als zweiten Inhalt auf der jeweiligen Seite (links/rechts). Die Anzeigeaufteilfelder müssen nicht ständig angezeigt werden, sie können durch den Einsatz einer Annäherungssensorik zum Erfassen einer Näherungsbewegung auch erst bei Annäherung der Nutzerhand eingeblendet werden. Beim Aufschalten des Klimamenüs über ein Anzeigeaufteilfeld wird der bisherige Inhalt des Displays verkleinert und auf der gewählten Seite zusätzlich das Klimamenü angezeigt. Der bisherige, nun verkleinerte Inhalt lässt sich weiterhin bedienen.

Konventionelle Lösungen schalten direkt auf das Klimamenü um oder legen die Klimaanzeigen über die vorherigen Inhalte. Bei einigen Ausführungsbeispielen schaltet der Controller die bisherigen Inhalte (z. B. Karte/Radio etc.) nicht weg, sondern zeigt sie verkleinert an und bietet die Möglichkeit diese Inhalte auch weiterhin parallel zum Klimamenü zu bedienen. Zudem muss die Klimabedienung nicht erst über das Hauptmenü oder über Hardkeys bzw. mechanische Taster aufgeschaltet werden, sondern kann direkt über dedizierte Bedienelemente auf dem Touchscreen, bzw. der Anzeigefläche der Anzeigevorrichtung angezeigt werden.

Das Anzeigen des zweiten Inhalts, kann auch als Klimascreen bezeichnet werden. Dieser funktioniert im Split-, Haupt- und Fullscreen wie alle anderen Kontexte. Geöffnet wird der Klimascreen nur über ein spezielles Anzeigeaufteilfeld für die Klimaanlage, die Klimalaschen (öffnet den Splitscreen) oder über den Klimahardkey (öffnet. Fullscreen), insbesondere aber nicht über ein Hauptmenü.

Bei einigen Ausführungsbeispielen wird ein Kontext 1 bzw. erster Inhalt im Fullscreen angezeigt. Das Anzeigeaufteilfeld wird von links aufgezogen. Der Splitscreen öffnet sich auf der linken Seite und zeigt den linken Sitz als Funktion. Kontext 1 verkleinert sich auf den Hauptscreen. Der Klimasplitscreen funktioniert nun wie ein Splitscreen jedes anderen Kontextes und kann über die Splitscreenlaschen weiter aufgezogen oder wieder geschlossen werden.

Bei einigen Ausführungsbeispielen wird auf der Fahrerseite Kontext 1 im Splitscreen angezeigt, auf der Beifahrerseite wird Kontext 2 im Hauptscreen angezeigt. Die Klimalasche bzw. das Anzeigeaufteilfeld wird auf der linken Seite aufgezogen. Die Klimalasche legt sich als zweiter Inhalt über den bestehenden Splitscreen auf der linken Seite und zeigt dann den linken Sitz. Der Hauptscreen mit Kontext 2 bleibt bestehen.

Bei einigen Ausführungsbeispielen wird auf der Fahrerseite Kontext 1 im Splitscreen angezeigt, auf der Beifahrerseite wird Kontext 2 im Hauptscreen angezeigt. Die Klimalasche wird auf der rechten Seite aufgezogen. Der Klimascreen wird auf der rechten Seite aufgeschoben und zeigt den rechten Sitz. Der Splitscreen mit Kontext 1 als erstem Inhalt wird nach links aus der Anzeigefläche bzw. dem Display geschoben. Der Hauptscreen mit Kontext 2 wird auf die linke Seite geschoben.

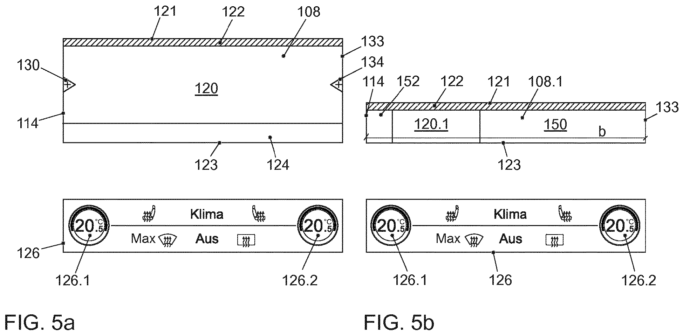

Die Figuren 5a und 5b zeigen eine schematische Darstellung einer Anzeigefläche 108 einer Anzeigevorrichtung 106, die mechanisch in mehrere Positionen gefahren werden kann. Im ausgefahrenen Zustand ist die volle Anzeigefläche 108, wie in Figur 5a dargestellt, zu sehen. Es besteht die Möglichkeit, die Anzeigevorrichtung so in einem Gehäusefach zu versenken, dass nur noch eine verkleinerte Anzeigefläche 108.1, wie in Figur 5b dargestellt, für einen Benutzer erkennbar ist.

Die Figuren 5a und 5b zeigen eine Situation, in der nur der erste Inhalt 120 als Vollbild (Fullscreen) auf der Anzeigefläche 108 dargestellt wird. Wenn die Anzeigevorrichtung 106 in eine Position gebracht wird, in der nur noch die verkleinerte Anzeigefläche 108.1 sichtbar ist, wechselt die Anzeige auf der Anzeigefläche 108.1 in eine so genannte reduzierte Ansicht. Die Statusleiste 122 wird weiterhin über die gesamte Breite b der Anzeigefläche 108.1 angezeigt.

Im vorliegenden Ausführungsbeispiel kann die verkleinerte Anzeigefläche 108.1 in drei Teilbereiche unterteilt sein. In einem Teilbereich, der am linken Seitenrand 114 liegt, wird ein Bedienelement 152, insbesondere für Schnellzugriffe, dargestellt. In einem Teilbereich, der am rechten Seitenrand 133 liegt, werden grundlegende Bedienelemente als Inhalt 150 dargestellt. In einem zwischen diesen beiden Teilbereichen liegenden Teilbereich wird der ursprüngliche Inhalt 120 als vereinfachter Inhalt 120.1 dargestellt. Der ursprüngliche Inhalt 120 wird in einem Teilbereich der Anzeigefläche 108.1 als vereinfachter Inhalt 120.1 dargestellt. Der Inhalt 120.1 enthält nur die grundlegenden Informationen. Grundsätzlich kann der Inhalt 120.1 auch dem Inhalt 120 in verkleinerter Darstellung entsprechen. Durch das Einfahren bzw. Versenken der Anzeigeeinrichtung kann, insbesondere bei Nachtfahrten die Blendwirkung des der Anzeigefläche reduziert werden.

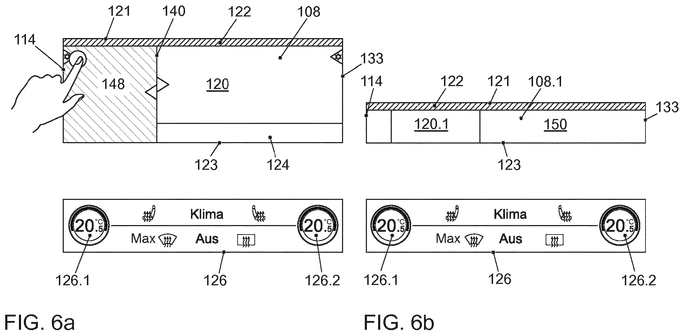

Die Figuren 6a und 6b zeigen eine Situation, bei der auf der Anzeigefläche bereits mehrere Inhalte 120 und 148 in einen geteilten Bildschirm (Splitscreen) angezeigt werden. Nach dem Einfahren oder Versenken der Anzeigevorrichtung 106 wird nur noch die verkleinerte Anzeigefläche 108.1 analog zur Anzeigefläche der Figur 5b dargestellt. Der Inhalt 148, der über das Anzeigeaufteilfeld aufgerufen wurde, wird ausgeblendet. Es wird nur der vereinfachte Inhalt 120.1, der zum Inhalt 120 korrespondiert, angezeigt.

In einigen (nicht dargestellten) Ausführungsbeispielen, werden, wenn als Inhalt 120 vor dem Versenken der Anzeigevorrichtung 106 ein Hauptmenü des Informationswiedergabesystems angezeigt wird, auf der verkleinerten Anzeigefläche 108.1 nach dem zumindest teilweisen Versenken der Anzeigevorrichtung 106 als Inhalt 120.1 eine Zusammenstellung von Schnellzugriffen der am häufigsten genutzten Funktion dargestellt. Alternativ, kann eine der in der verkleinernden Ansicht darzustellenden Funktionen ausgewählt und/oder programmiert werden.

Mit anderen Worten kann die Anzeigevorrichtung bzw. ein Hauptanzeigedisplay mechanisch in mehrere Positionen gefahren werden. Im ausgefahrenen Zustand ist die volle Anzeigefläche bzw. Displayfläche zu sehen und es können ein oder mehrere Inhalte gleichzeitig angezeigt werden. Die Anzeigevorrichtung kann nun eingefahren werden, sodass nur noch ein Teil der Displayfläche zu sehen ist. Während die Anzeigevorrichtung eingefahren wird, ändert sich der auf der Anzeigefläche wiedergegebene Inhalt.

Bei einigen weiteren Ausführungsbeispielen kann vor dem Verfahren der Anzeigevorrichtung nur ein Inhalt angezeigt werde. Mit dem Verfahren der Anzeigevorrichtung wechselt dieser Inhalt, in eine reduzierte Ansicht in der die grundlegenden Informationen und Bedienelemente dargestellt werden.

Bei einigen weiteren Ausführungsbeispielen werden vor dem Verfahren mehrere Inhalte, gleichzeitig angezeigt, bzw. in der Anzeigefläche wiedergegeben (ein Inhalt im Hauptscreen, ein Inhalt im Splitscreen). Wechselt die Anzeige (nach dem Verfahren bzw. teilweisen Versenken) der Anzeigevorrichtung in eine reduzierte Ansicht des Hauptinhaltes, werden die anderen Inhalte ausgeblendet. Beim erneuten Ausfahren werden wieder alle zuvor angezeigten Inhalte angezeigt. Wird während die Anzeigevorrichtung eingefahren ist, in einen anderen Kontext umgeschaltet, betrifft dies beim erneuten Ausfahren nur den Hauptinhalt.

Wird vor dem Verfahren der Anzeigevorrichtung das Hauptmenü angezeigt, wechselt die Anzeige zu Shortcuts bzw. Zeichen die die am häufigsten genutzten oder individuell abgespeicherten Funktionen darstellen.

Einige Ausführungsbeispiele bieten gegenüber konventionellen Lösungen eine Zwischenstufe eines verfahrbaren Anzeigevorrichtung, sodass z. B. bei Nachfahrten die Blendwirkung der Anzeigevorrichtung reduziert werden kann aber gleichzeitig die Hauptfunktionen noch bedienbar bleiben.

Bei einigen weiteren Ausführungsbeispielen wird ein Kontext bzw. Inhalt im Fullscreen bzw. Vollbild angezeigt. Die Anzeigevorrichtung wird eingefahren. Die Anzeigevorrichtung zeigt eine reduzierte Ansicht mit grundlegenden Informationen und Bedienelementen

Bei einigen weiteren Ausführungsbeispielen wird auf der Fahrerseite Kontext 1 im Splitscreen angezeigt, auf der Beifahrerseite wird Kontext 2 im Hauptscreen angezeigt. Die Anzeigevorrichtung wird eingefahren. Die Anzeigefläche zeigt eine reduzierte Ansicht mit grundlegenden Informationen und Bedienelementen des Hauptkontextes (Kontext 2). Beim Ausfahren der Anzeigevorrichtung werden wieder beide Inhalte bzw. Kontexte angezeigt (Kontext 1 im Splitscreen, Kontext 2 im Hauptscreen).

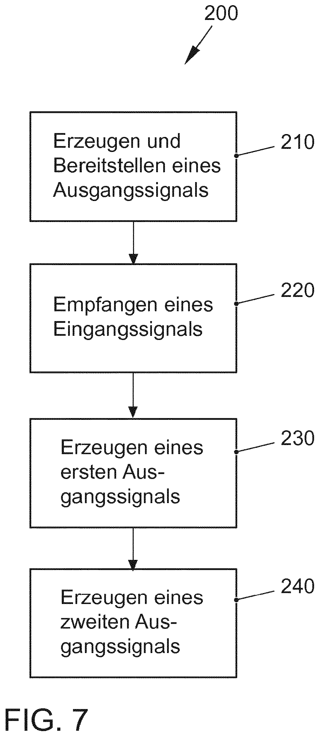

Die Figur 7 zeigt ein Flussdiagramm eines Verfahrens 200 zur Wiedergabe zumindest eines Inhalts auf einer Anzeigefläche einer Anzeigevorrichtung in einem Informationswiedergabesystem eines Fahrzeugs. Das Verfahren umfasst als Bereitstellungsschritt 210 Erzeugen und Bereitstellen eines Ausgangssignals, sodass eine Anzeige eines Inhalts auf der Anzeigefläche der Anzeigevorrichtung bewirkt wird. Ferner umfasst das Verfahren 200 als Bereitstellungsschritt 220 Empfangen eines Eingangssignals, das zu einer Bewegung eines Benutzers relativ zu der Anzeigefläche korrespondiert. Zusätzlich umfasst das Verfahren 200 als Bereitstellungsschritt 230 Erzeugen eines ersten Ausgangssignals sodass, eine Wiedergabe von zumindest einem ersten Inhalt in der Anzeigefläche bewirkt wird. Als Bereitstellungsschritt 240 umfasst das Verfahren 200 Erzeugen eines zweiten Ausgangssignals, sodass eine zusätzliche Widergabe eines zweiten Inhalts bewirkt wird, wenn das empfangene Eingangssignal zu einer an einem vorbestimmten Rand der Anzeigefläche beginnenden und sich von dem Rand weg erstreckenden Bewegung des Benutzers korrespondiert. Das zweite Ausgangssignal bewirkt die Wiedergabe des zweiten Inhalts in einem Teilbereich der Anzeigefläche bewirkt, die an den vorbestimmten Rand angrenzt.

Die in der vorstehenden Beschreibung, den nachfolgenden Ansprüchen und den beigefügten Figuren offenbarten Merkmale können sowohl einzeln wie auch in beliebiger Kombination für die Verwirklichung eines Ausführungsbeispiels in ihren verschiedenen Ausgestaltungen von Bedeutung sein und implementiert werden.

Obwohl manche Aspekte im Zusammenhang mit einer Vorrichtung beschrieben wurden, versteht es sich, dass diese Aspekte auch eine Beschreibung des entsprechenden Verfahrens darstellen, sodass ein Block oder ein Bauelement einer Vorrichtung auch als ein entsprechender Verfahrensschritt oder als ein Merkmal eines Verfahrensschrittes zu verstehen ist. Analog dazu stellen Aspekte, die im Zusammenhang mit einem oder als ein Verfahrensschritt beschrieben wurden, auch eine Beschreibung eines entsprechenden Blocks oder Details oder Merkmals einer entsprechenden Vorrichtung dar.

Je nach bestimmten Implementierungsanforderungen können Ausführungsbeispiele der Erfindung in Hardware oder in Software implementiert sein. Die Implementierung kann unter Verwendung eines digitalen Speichermediums, beispielsweise einer Floppy-Disk, einer DVD, einer Blu-Ray Disc, einer CD, eines ROM, eines PROM, eines EPROM, eines EEPROM oder eines FLASH-Speichers, einer Festplatte oder eines anderen magnetischen oder optischen Speichers durchgeführt werden, auf dem elektronisch lesbare Steuersignale gespeichert sind, die mit einer programmierbaren Hardwarekomponente derart zusammenwirken können oder zusammenwirken, dass das jeweilige Verfahren durchgeführt wird.

Eine programmierbare Hardwarekomponente kann durch einen Prozessor, einen Computerprozessor (CPU = Central Processing Unit), einen Grafikprozessor (GPU = Graphics Processing Unit), einen Computer, ein Computersystem, einen anwendungsspezifischen integrierten Schaltkreis (ASIC = Application-Specific Integrated Circuit), einen integrierten Schaltkreis (IC = Integrated Circuit), ein Ein-Chip-System (SOC = System on Chip), ein programmierbares Logikelement oder ein feldprogrammierbares Gatterarray mit einem Mikroprozessor (FPGA = Field Programmable Gate Array) gebildet sein.

Das digitale Speichermedium kann daher maschinen- oder computerlesbar sein. Manche Ausführungsbeispiele umfassen also einen Datenträger, der elektronisch lesbare Steuersignale aufweist, die in der Lage sind, mit einem programmierbaren Computersystem oder einer programmierbare Hardwarekomponente derart zusammenzuwirken, dass eines der hierin beschriebenen Verfahren durchgeführt wird. Ein Ausführungsbeispiel ist somit ein Datenträger (oder ein digitales Speichermedium oder ein computerlesbares Medium), auf dem das Programm zum Durchführen eines der hierin beschriebenen Verfahren aufgezeichnet ist.

Allgemein können Ausführungsbeispiele der vorliegenden Erfindung als Programm, Firmware, Computerprogramm oder Computerprogrammprodukt mit einem Programmcode oder als Daten implementiert sein, wobei der Programmcode oder die Daten dahin gehend wirksam ist bzw. sind, eines der Verfahren durchzuführen, wenn das Programm auf einem Prozessor oder einer programmierbaren Hardwarekomponente abläuft. Der Programmcode oder die Daten kann bzw. können beispielsweise auch auf einem maschinenlesbaren Träger oder Datenträger gespeichert sein. Der Programmcode oder die Daten können unter anderem als Quellcode, Maschinencode oder Bytecode sowie als anderer Zwischencode vorliegen.

Ein weiteres Ausführungsbeispiel ist ferner ein Datenstrom, eine Signalfolge oder eine Sequenz von Signalen, der bzw. die das Programm zum Durchführen eines der hierin beschriebenen Verfahren darstellt bzw. darstellen. Der Datenstrom, die Signalfolge oder die Sequenz von Signalen kann bzw. können beispielsweise dahin gehend konfiguriert sein, um über eine Datenkommunikationsverbindung, beispielsweise über das Internet oder ein anderes Netzwerk, transferiert zu werden. Ausführungsbeispiele sind so auch Daten repräsentierende Signalfolgen, die für eine Übersendung über ein Netzwerk oder eine Datenkommunikationsverbindung geeignet sind, wobei die Daten das Programm darstellen.

Ein Programm gemäß einem Ausführungsbeispiel kann eines der Verfahren während seiner Durchführung beispielsweise dadurch umsetzen, dass dieses Speicherstellen ausliest oder in diese ein Datum oder mehrere Daten hinein schreibt, wodurch gegebenenfalls Schaltvorgänge oder andere Vorgänge in Transistorstrukturen, in Verstärkerstrukturen oder in anderen elektrischen, optischen, magnetischen oder nach einem anderen Funktionsprinzip arbeitenden Bauteile hervorgerufen werden. Entsprechend können durch ein Auslesen einer Speicherstelle Daten, Werte, Sensorwerte oder andere Informationen von einem Programm erfasst, bestimmt oder gemessen werden. Ein Programm kann daher durch ein Auslesen von einer oder mehreren Speicherstellen Größen, Werte, Messgrößen und andere Informationen erfassen, bestimmen oder messen, sowie durch ein Schreiben in eine oder mehrere Speicherstellen eine Aktion bewirken, veranlassen oder durchführen sowie andere Geräte, Maschinen und Komponenten ansteuern.

Die oben beschriebenen Ausführungsbeispiele stellen lediglich eine Veranschaulichung der Prinzipien der vorliegenden Erfindung dar. Es versteht sich, dass Modifikationen und Variationen der hierin beschriebenen Anordnungen und Einzelheiten anderen Fachleuten einleuchten werden.

## Patentansprüche

1. System für die Wiedergabe von Information, umfassend:
ein Fahrzeug sowie ein Informationswiedergabesystem (100), das mit dem Fahrzeug verbunden ist,
das Informationswiedergabesystem (100) umfassend:
einen Controller (101) und eine Anzeigevorrichtung (106) mit einer Anzeigefläche (108), der mit dem Controller zu Ansteuerung verbunden ist,
wobei
der Controller (101) umfasst:
eine Ausgangseinrichtung (102) zum Bereitstellen eines von dem Controller (101) erzeugten Ausgangssignals, das eine Wiedergabe eines Inhalts auf der Anzeigefläche (108) der Anzeigevorrichtung (106) bewirkt;
eine Eingangseinrichtung (110) zum Empfangen eines Eingangssignals (110), das zu einer Bewegung eines Benutzers relativ zu der Anzeigefläche (108) korrespondiert;
wobei der Controller (101) ausgebildet ist, um ein erstes Ausgangssignal (104) zu erzeugen, das eine Wiedergabe von zumindest einem ersten Inhalt (120) in der Anzeigefläche (108) bewirkt, und
wobei der Controller (101) ferner ausgebildet ist, um ein zweites Ausgangssignal (118) zu erzeugen, das eine zusätzliche Wiedergabe eines zweiten Inhalts (138) in der Anzeigefläche (108) bewirkt, wenn
das Eingangssignal (110) zu einer an einem vorbestimmten Rand (114) der Anzeigefläche (108) beginnenden und sich von dem Rand (114) weg erstreckenden Bewegung des Benutzers korrespondiert,
wobei das zweite Ausgangssignal (118) die Wiedergabe des zweiten Inhalts (138) in einem Teilbereich (116) der Anzeigefläche (108) bewirkt, die an den vorbestimmten Rand (114) angrenzt, wobei der erste Inhalt (120) und der zweite Inhalt (138) gleichzeitig angezeigt werden,
**dadurch gekennzeichnet, dass** das zweite Ausgangssignal (118) die Wiedergabe einer Information über eine Funktionalität des Fahrzeugs bewirkt, wobei die Funktionalität einem Ort innerhalb des Fahrzeugs zugeordnet ist, wobei der Ort zu dem vorbestimmten Rand (114) korrespondiert, wobei das zweite Ausgangsignal (118) die Wiedergabe einer Funktionalität einer Klimaanlage und einer Sitzheizung des Fahrzeugs bewirkt, und wobei bei einer Bewegung des Benutzers, die an einem oberen Rand der Anzeigefläche beginnt, ein zweiter Inhalt (138) geöffnet wird, der eine Funktionalität betrifft, die sich über der Anzeigefläche oder an der Decke des Fahrzeugs befindet.

2. Informationswiedergabesystem (100) nach Anspruch 1, wobei das erste Ausgangssignal (104) die Wiedergabe zumindest eines Anzeigeaufteilungsfeldes (130) als Teil des ersten Inhalts (120) auf der Anzeigefläche (108) bewirkt.

3. Informationswiedergabesystem (100) nach Anspruch 2, wobei der Controller (101) ausgebildet ist, das zweite Ausgangssignal (118) zu erzeugen, wenn die Bewegung des Benutzers an dem Anzeigeaufteilungsfeld (130) beginnt.

4. Informationswiedergabesystem (100) nach Anspruch 2 oder 3, wobei das erste Ausganssignal (104) die Wiedergabe zumindest eines zusätzlichen Anzeigeaufteilungsfeldes (132) auf der Anzeigefläche (108) bewirkt, das der Funktionalität einer Klimaanlage des Fahrzeugs zugeordnet ist.

5. Informationswiedergabesystem (100) nach einem der vorhergehenden Ansprüche, wobei die Eingangseinrichtung (110) ferner ausgebildet ist, ein Auslösesignal zu empfangen, das zu einer Näherungsbewegung eines Benutzers an die Anzeigefläche (108) korrespondiert, und wobei das erste Ausgangssignal (104) erzeugt wird, wenn das Auslösesignal empfangen wird.

6. Informationswiedergabesystem (100) nach einem der vorherigen Ansprüche , ferner umfassend eine Eingabetaste (126), deren Betätigung bewirkt, dass ein weiteres Ausganssignal erzeugt wird, wobei das weitere Ausganssignal die Wiedergabe einer Funktionalität einer Klimaanlage des Fahrzeugs bewirkt.

7. Verfahren zur Wiedergabe zumindest eines Inhalts auf einer Anzeigefläche (108) einer Anzeigevorrichtung (106) in einem Informationswiedergabesystem (100) eines Fahrzeugs in einem System für die Wiedergabe von Information, umfassend: das Fahrzeug sowie das Informationswiedergabesystem (100), mit folgenden Schritten:
Erzeugen und Bereitstellen eines Ausgangssignals, sodass eine Anzeige eines Inhalts auf der Anzeigefläche (108) der Anzeigevorrichtung (106) bewirkt wird;
Empfangen eines Eingangssignals (110), das zu einer Bewegung eines Benutzers relativ zu der Anzeigefläche (108) korrespondiert;
Erzeugen eines ersten Ausgangssignals (104) sodass, eine Wiedergabe von zumindest einem ersten Inhalt (120) in der Anzeigefläche (108) bewirkt wird, und
Erzeugen eines zweiten Ausgangssignals (118), sodass eine zusätzliche Wiedergabe eines zweiten Inhalts (138) bewirkt wird,
wenn das empfangene Eingangssignal (110) zu einer an einem vorbestimmten Rand (114) der Anzeigefläche (108) beginnenden und sich von dem Rand (114) weg erstreckenden Bewegung des Benutzers korrespondiert,
wobei, das zweite Ausgangssignal (118) die Wiedergabe des zweiten Inhalts (138) in einem Teilbereich (116) der Anzeigefläche (108) bewirkt, die an den vorbestimmten Rand (114) angrenzt, wobei der erste Inhalt (120) und der zweite Inhalt (138) gleichzeitig angezeigt werden,
**dadurch gekennzeichnet**, das das Erzeugen eines zweiten Ausgangssignals (118), eine Wiedergabe des zweiten Inhalts (138) als eine Information über eine Funktionalität des Fahrzeugs bewirkt, wobei die Funktionalität einem Ort innerhalb des Fahrzeugs zugeordnet ist, der zu dem vorbestimmten Rand korrespondiert, wobei das Erzeugen des zweiten Ausgangssignals (118), die Wiedergabe einer Funktionalität einer Klimaanlage und einer Sitzheizung des Fahrzeugs bewirkt, und
wobei bei einer Bewegung des Benutzers, die an einem oberen Rand der Anzeigefläche beginnt, ein zweiter Inhalt (138) geöffnet wird, der eine Funktionalität betrifft, die sich über der Anzeigefläche oder an der Decke des Fahrzeugs befindet.

8. Programm mit einem Programmcode zum Durchführen eines der Verfahren nach Anspruch 7, wenn der Programmcode auf einem Computer, einem Controller (101) oder einer programmierbaren Hardwarekomponente ausgeführt wird.

## Claims

1. System for the reproduction of information, comprising:
a vehicle and an information reproduction system (100) that is connected to the vehicle,
the information reproduction system (100) comprising:
a controller (101) and a display device (106) with a display area (108) that is connected to the controller for actuation,
wherein
the controller (101) comprises:
an output apparatus (102) for providing an output signal that is generated by the controller (101) and effects a reproduction of a content item on the display area (108) of the display device (106);
an input apparatus (110) for receiving an input signal (110) that corresponds to a movement of a user relative to the display area (108);
wherein the controller (101) is designed to generate a first output signal (104) that effects a reproduction of at least a first content item (120) in the display area (108), and
wherein the controller (101) is also designed to generate a second output signal (118) that effects an additional reproduction of a second content item (138) in the display area (108) if
the input signal (110) corresponds to a movement of the user that starts at a predetermined edge (114) of the display area (108) and extends away from the edge (114), wherein the second output signal (118) effects the reproduction of the second content item (138) in a subregion (116) of the display area (108) that adjoins the predetermined edge (114), wherein the first content item (120) and the second content item (138) are displayed simultaneously,
**characterized in that** the second output signal (118) effects the reproduction of information regarding a functionality of the vehicle, wherein the functionality is assigned to a location within the vehicle, wherein the location corresponds to the predetermined edge (114), wherein the second output signal (118) effects the reproduction of a functionality of an air-conditioning system and a seat heating system of the vehicle, and wherein, in the event of a movement of the user that starts at an upper edge of the display area, a second content item (138) is opened, which relates to a functionality that is above the display area or on the ceiling of the vehicle.

2. Information reproduction system (100) according to Claim 1, wherein the first output signal (104) effects the reproduction of at least one display division field (130) as part of the first content item (120) on the display area (108).

3. Information reproduction system (100) according to Claim 2, wherein the controller (101) is designed to generate the second output signal (118) if the movement of the user starts at the display division field (130).

4. Information reproduction system (100) according to Claim 2 or 3, wherein the first output signal (104) effects the reproduction of at least one additional display division field (132), which is assigned to the functionality of an air-conditioning system of the vehicle, on the display area (108).

5. Information reproduction system (100) according to one of the preceding claims, wherein the input apparatus (110) is also designed to receive a trigger signal that corresponds to an approach movement of a user to the display area (108), and wherein the first output signal (104) is generated if the trigger signal is received.

6. Information reproduction system (100) according to one of the preceding claims, also comprising an input key (126), the activation of which causes a further output signal to be generated, wherein the further output signal effects the reproduction of a functionality of an air-conditioning system of the vehicle.

7. Method for the reproduction of at least one content item on a display area (108) of a display device (106) in an information reproduction system (100) of a vehicle in a system for the reproduction of information, comprising: the vehicle and the information reproduction system (100), having the following steps:
generating and providing an output signal such that a display of a content item on the display area (108) of the display device (106) is effected;
receiving an input signal (110) that corresponds to a movement of a user relative to the display area (108);
generating a first output signal (104) such that a reproduction of at least a first content item (120) in the display area (108) is effected, and
generating a second output signal (118) such that an additional reproduction of a second content item (138) is effected
if the received input signal (110) corresponds to a movement of the user that starts at a predetermined edge (114) of the display area (108) and extends away from the edge (114),
wherein the second output signal (118) effects the reproduction of the second content item (138) in a subregion (116) of the display area (108) that adjoins the predetermined edge (114), wherein the first content item (120) and the second content item (138) are displayed simultaneously,
**characterized in that** generating a second output signal (118) effects a reproduction of the second content item (138) as information regarding a functionality of the vehicle, wherein the functionality is assigned to a location within the vehicle that corresponds to the predetermined edge, wherein generating the second output signal (118) effects the reproduction of a functionality of an air-conditioning system and a seat heating system of the vehicle, and
wherein, in the event of a movement of the user that starts at an upper edge of the display area, a second content item (138) is opened, which relates to a functionality that is above the display area or on the ceiling of the vehicle.

8. Program having a program code for carrying out one of the methods according to Claim 7 when the program code is executed on a computer, a controller (101) or a programmable hardware component.

## Revendications

1. Système destiné à la reproduction d'informations, ledit système comprenant :
un véhicule et un système de reproduction d'informations (100) qui est relié au véhicule,
le système de reproduction d'informations (100) comprenant :
un contrôleur (101) et un dispositif d'affichage (106) pourvu d'une surface d'affichage (108) qui est reliée au contrôleur pour l'activation,
le contrôleur (101) comprenant :
un module de sortie (102) destiné à fournir un signal de sortie qui est généré par le contrôleur (101) et qui induit une reproduction du contenu sur la surface d'affichage (108) du dispositif d'affichage (106) ;
un module d'entrée (110) destiné à recevoir un signal d'entrée (110) qui correspond à un déplacement d'un utilisateur par rapport à la surface d'affichage (108) ;
le contrôleur (101) étant conçu pour générer un premier signal de sortie (104) qui induit une reproduction d'au moins un premier contenu (120) dans la zone d'affichage (108), et
le contrôleur (101) étant en outre conçu pour générer un deuxième signal de sortie (118) qui induit une reproduction supplémentaire d'un deuxième contenu (138) dans la zone d'affichage (108) si le signal d'entrée (110) correspond à un mouvement de l'utilisateur commençant au niveau d'un bord prédéterminé (114) de la surface d'affichage (108) et s'éloignant du bord (114), le deuxième signal de sortie (118) induisant la reproduction du deuxième contenu (138) dans une partie (116) de la surface d'affichage (108) qui est adjacente au bord prédéterminé (114), le premier contenu (120) et le deuxième contenu (138) étant affichés simultanément,
**caractérisé en ce que** le deuxième signal de sortie (118) induit la reproduction d'une information concernant une fonctionnalité du véhicule, la fonctionnalité étant associée à un emplacement à l'intérieur du véhicule, l'emplacement correspondant au bord prédéterminé (114), le deuxième signal de sortie (118) induisant la reproduction d'une fonctionnalité d'une climatisation et d'un chauffage de siège du véhicule et, lors du mouvement de l'utilisateur qui commence au niveau d'un bord supérieur de la surface d'affichage, un deuxième contenu (138) est ouvert qui concerne la fonctionnalité qui se trouve au-dessus de la surface d'affichage ou au plafond du véhicule.

2. Système d'affichage d'informations (100) selon la revendication 1, le premier signal de sortie (104) induisant l'affichage d'au moins une zone de division d'affichage (130) en tant que partie du premier contenu (120) sur la surface d'affichage (108).

3. Système de reproduction d'informations (100) selon la revendication 2, le contrôleur (101) étant conçu pour générer le deuxième signal de sortie (118) lorsque le mouvement de l'utilisateur commence au niveau de la zone de division d'affichage (130).

4. Système d'affichage d'informations (100) selon la revendication 2 ou 3, le premier signal de sortie (104) induisant la reproduction d'au moins une zone de division d'affichage supplémentaire (132), associée à la fonctionnalité de climatisation du véhicule, sur la surface d'affichage (108).

5. Système de reproduction d'informations (100) selon l'une des revendications précédentes, le module d'entrée (110) étant en outre conçu pour recevoir un signal de déclenchement qui correspond à un mouvement d'approche d'un utilisateur vers la surface d'affichage (108), et le premier signal de sortie (104) étant généré lorsque le signal de déclenchement est reçu.

6. Système de reproduction d'informations (100) selon l'une des revendications précédentes, ledit système comprenant en outre un bouton d'entrée (126) dont l'actionnement induit la génération d'un autre signal de sortie, l'autre signal de sortie induisant la reproduction d'une fonctionnalité d'une climatisation du véhicule.

7. Procédé de reproduction d'au moins un contenu sur une surface d'affichage (108) d'un dispositif d'affichage (106) dans un système de reproduction d'informations (100) d'un véhicule dans un système destiné à la reproduction d'informations et comprenant : le véhicule et le système de reproduction d'informations (100), ledit procédé comprenant les étapes suivantes :
générer et fournir un signal de sortie destiné à induire un affichage d'un contenu sur la surface d'affichage (108) du dispositif d'affichage (106) ;
recevoir un signal d'entrée (110) qui correspond à un mouvement d'un utilisateur par rapport à la surface d'affichage (108) ;
générer un premier signal de sortie (104) induisant une reproduction d'au moins un premier contenu (120) dans la surface d'affichage (108), et
générer un deuxième signal de sortie (118) induisant une reproduction supplémentaire du deuxième contenu (138),
si le signal d'entrée reçu (110) correspond à un mouvement de l'utilisateur qui commence au niveau d'un bord prédéterminé (114) de la surface d'affichage (108) et qui s'éloigne du bord (114),
le deuxième signal de sortie (118) induisant la reproduction du deuxième contenu (138) dans une partie (116) de la zone d'affichage (108) adjacente au bord prédéterminé (114), le premier contenu (120) et le deuxième contenus (138) étant affichés simultanément,
**caractérisé en ce que** la génération d'un deuxième signal de sortie (118) induit une reproduction du deuxième contenu (138) en tant qu'information sur une fonctionnalité du véhicule, la fonctionnalité étant associée à un emplacement à l'intérieur du véhicule qui correspond au bord prédéterminé, la génération du deuxième un signal de sortie (118) induisant la reproduction d'une fonctionnalité d'une climatisation et d'un chauffage de siège du véhicule, et
lors d'un mouvement de l'utilisateur qui commence au niveau d'un bord supérieur de la surface d'affichage, un deuxième contenu (138) étant ouvert qui concerne la fonctionnalité qui se trouve au-dessus de la surface d'affichage ou au plafond du véhicule.

8. Programme comprenant un code de programme destiné à mettre en œuvre l'un des procédés selon la revendication 7, lorsque le code de programme est exécuté sur un ordinateur, un contrôleur (101) ou un composant matériel programmable.
